**Europäisches Patentamt**

**European Patent Office**

**Office européen des brevets**

(19)

(11) Numéro de publication : **0 345 131 B1**

(12)

# FASCICULE DE BREVET EUROPEEN

(45) Date de publication du fascicule du brevet :
**23.12.92 Bulletin 92/52**

(51) Int. Cl.$^5$ : **B65G 5/00**, B09B 1/00

(21) Numéro de dépôt : **89401448.9**

(22) Date de dépôt : **26.05.89**

(54) **Procédé d'abandon rapide de grandes cavités lessivées en sel gemme.**

(30) Priorité : **02.06.88 FR 8807336**

(43) Date de publication de la demande :
**06.12.89 Bulletin 89/49**

(45) Mention de la délivrance du brevet :
**23.12.92 Bulletin 92/52**

(84) Etats contractants désignés :
**AT DE ES FR GB IT NL**

(56) Documents cités :
**EP-A- 0 230 913**
**EP-A- 0 291 946**
**DE-A- 3 141 884**
**DE-B- 1 221 165**
**FR-A- 2 515 150**
**US-A- 3 459 002**

(73) Titulaire : **GEOSTOCK S.A.R.L.**
**7, rue E. et A. Peugeot**
**F-92563 Rueil-Malmaison Cédex (FR)**
Titulaire : **ESYS**
**73, Boulevard Haussmann**
**F-75008 Paris (FR)**

(72) Inventeur : **Boulanger, Alain**
**18, rue Pasteur**
**F-92300 Levallois-Perret (FR)**
Inventeur : **Rousseau, André Jean**
**9, avenue Perronet**
**F-92200 Neuilly-sur-Seine (FR)**

(74) Mandataire : **Pinguet, André**
**Cabinet de Propriété Industrielle CAPRI 28
bis, avenue Mozart**
**F-75016 Paris (FR)**

EP 0 345 131 B1

## Description

A l'issue de l'exploitation d'une mine ou d'une carrière souterraine, demeurent dans le sous-sol des vides qui, en l'absence de mesures de soutènement adaptées, risquent de s'effondrer et d'entraîner des affaissements de terrain préjudiciables aux infrastructures de surface. Aussi, avant d'abandonner la surveillance des cavités, convient-il de mettre en oeuvre des moyens propres à éviter tout désordre ultérieur. La présente invention concerne de tels moyens, appliqués toutefois aux gisements de sel gemme particulièrement puissants (plusieurs centaines de mètres d'épaisseur), et plus précisément à ceux qui ont fait l'objet d'une exploitation par lessivage.

En effet, les méthodes traditionnelles de remblayage ou de foudroyage ne sont pas praticables dans de tels gisements. En raison des conditions d'excavation, les cavités lessivées communiquent en général avec la surface par un unique forage et sont donc inaccessibles aux hommes et aux engins habituels de remblayage par des stériles. Bien qu'elles soient la plupart du temps situées à des profondeurs supérieures à 500 mètres, leur taille de l'ordre de plusieurs centaines de milliers de mètres cubes interdit le foudroyage sous peine d'un tassement inacceptable de la surface. Cette méthode radicale induirait également un bouleversement de la circulation des eaux souterraines susceptible d'accélérer considérablement la subrosion du massif de sel. Il convient donc de créer un soutènement durable de la cavité lessivée. A l'heure actuelle, la saumure présente à l'issue du lessivage est utilisée à cette fin. Le liquide exerce en effet sur la paroi saline des efforts qui, à l'échelle d'une vie humaine, sont capables d'en stabiliser l'évolution.

Toutefois, ce résultat ne s'obtient pas immédiatement après la fin de l'extraction du sel. L'eau douce injectée, qui se sature en sels dissous au contact des parois salées, se trouve en effet à une température inférieure à celle du massif encaissant, plutôt de l'ordre de plusieurs dizaines de degrés Celsius du fait des profondeurs considérées. Cela conduit à une diminution de la température du terrain environnant la cavité. Après l'arrêt de son exploitation, le flux géothermique assure le réchauffement de ce terrain. Petit à petit, il réchauffe à son tour la saumure et, par voie de conséquence, cette dernière se dilate. L'augmentation de volume se poursuit jusqu'à ce que la température de la saumure atteigne celle de la roche encaissante. Durant cette période transitoire, il n'est pas souhaitable de sceller la cavité. Dans le cas d'une fermeture prématurée, la pression de la saumure pourrait en effet augmenter jusqu'à entraîner la rupture du bouchon de ciment obturant le forage. Ce dernier se fissurerait, offrant ainsi un passage à la saumure jusqu'aux nappes phréatiques supérieures qui se trouveraient de ce fait polluées.

L'abandon de la cavité lessivée ne peut donc intervenir qu'après l'établissement de l'équilibre thermique dans la roche ainsi qu'entre la roche et la saumure. Malgré les mouvements de convexion au sein de la saumure dus à l'importante différence de température entre le toit et le mur de la cavité (typiquement 30°C) et à l'amélioration des échanges thermiques qui en résulte, cet équilibre n'est atteint qu'après plusieurs années en raison du volume considérable mis en cause. Les entreprises exploitantes prévoient généralement d'abandonner les sites au bout de trente années. Dans ce laps de temps, la pression de saumure en tête du forage doit être surveillée et ramenée régulièrement en deçà de la pression lithostatique. Il est clair que ce suivi, aussi automatisé soit-il, reste astreignant par sa durée.

C'est ainsi que le présent procédé d'abandon a pour but de ramener la durée de surveillance, entre la fin de l'exploitation du site et le scellement du forage, à quelques années. Pour cela, il prévoit d'injecter dans la cavité des quantités d'un mélange plus dense que la saumure et capable de faire prise tandis que des quantités équivalentes de saumure sont refoulées à l'extérieur de la cavité, et ce jusqu'au remplissage complet de la cavité par le mélange. De la sorte, la cavité reste à tout instant remplie d'un liquide ou d'un solide qui appliquent à sa paroi un effort de soutènement. Les risques d'effondrement général sont par conséquent écartés.

Cette méthode, qui n'est pas nouvelle, a été développée plutôt en vue de se débarrasser de déchets en les amalgamant au mélange injecté. On en trouvera un exemple dans la demande de brevet allemand DE-A-3 141 884. Toutefois, ce document antérieur n'envisage de sceller la cavité remplie de mélange qu'après un délai d'attente correspondant au rétablissement de l'équilibre thermique du site. Aussi, comme dans le cas où la cavité demeure remplie de saumure, la surveillance doit être prolongée pendant plusieurs dizaines d'années. Il n'est en effet pas question de laisser sans contrôle un forage ouvert qui s'étend jusqu'à des couches salifères par nature extrêmement solubles et donc à la merci de la moindre venue d'eau douce.

Le présent procédé se distingue en ce que le délai d'attente entre le remplissage complet de la cavité par la méthode évoquée ci-dessus et le scellement de ladite cavité est déterminé par le temps nécessaire au sel gemme pour refermer par fluage les vides de retrait apparus dans le mélange remplissant complètement la cavité et ayant fait prise.

Autrement dit, on laisse converger les parois de la cavité sous la sollicitation du poids des terres de sorte que les vides de retrait du mélange pris se referment. Une large part de la saumure ou des liquides entrant dans la composition du mélange et qui occupe ces vides, est alors expulsée hors de la cavité laissée ouverte pour autoriser ce départ de matière. Or, des calculs montrent que cela intervient entre deux et trois ans après le remplissage de la cavité. Il s'agit là d'un délai notablement plus court que celui nécessaire à l'établissement de l'équilibre thermique dans le gisement et évalué le plus souvent aux alentours de 30 ans. Contrairement au procédé classique exposé tout d'abord ou à celui de la demande DE-A-3 141 884, le présent procédé évite donc de maintenir plus longtemps la cavité ouverte. Il ne reste en effet dans cette dernière qu'une quantité négligeable de liquide susceptible encore de se dilater. Aussi, en dépit d'un scellement avant la stabilisation des températures, aucune surpression indésirable n'y est plus à craindre.

Différents modes de réalisation avantageux du présent procédé sont par ailleurs exposés dans les revendications 2 et suivantes jointes à la présente demande.

Ce procédé d'abandon va maintenant être décrit à l'aide de dessins présentant schématiquement la coupe verticale d'un massif de sel gemme avec une cavité lessivée. Il convient de noter que la section des forages verticaux représentés est parfaitement disproportionnée. Elle est en effet grossie pour des raisons évidentes de lisibilité des croquis. Ceux-ci sont par ailleurs donnés à titre d'exemple non limitatif des modes possibles de réalisation de l'invention.

Sur les dessins :

la figure 1 et la figure 5 sont identiques. Elles montrent une cavité lessivée à l'issue de son exploitation par lessivage ;

la figure 2 représente la cavité de la figure 1 en cours de remplissage selon un premier mode de réalisation du procédé selon l'invention ;

les figures 3 et 10 indiquent, en plus de sa paroi initiale en pointillés, le nouveau pourtour de la cavité avant que celle-ci ne soit scellée ;

la figure 4 schématise la cavité scellée ;

les figures 6 à 9 montrent la même cavité en cours de remplissage selon un second mode de réalisation du procédé de l'invention.

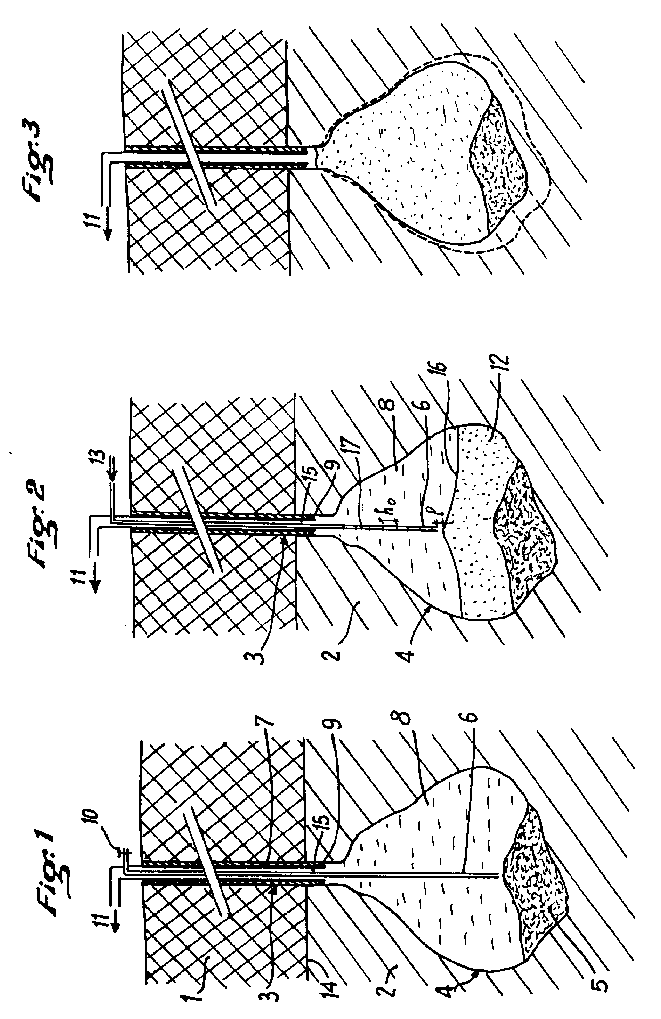

Comme cela est indiqué de façon très schématique sur la figure 1, la structure d'un gisement de sel gemme peut être ramenée très simplement à une couverture 1 et un massif salifère 2. Tandis que, typiquement, la couverture 1 se compose de roches sédimentaires, accueille les nappes phréatiques et peut admettre quelques centaines de mètres de puissance, le massif salifère 2 est formé d'évaporites très peu voire non perméables. Lorsqu'il est puissant (plusieurs milliers de mètres) comme dans les dômes, diapirs ou certaines couches, l'extraction du sel par lessivage est particulièrement intéressante. Cette technique consiste à injecter de l'eau douce dans le massif salifère 2 grâce à un tube plongeur 6 placé dans un forage 3. L'eau dissout les sels, d'abord aux alentours du forage, puis à la paroi d'une cavité 4 qui ne cesse de s'agrandir. En raison de leur poids, les impuretés insolubles 5 s'accumulent au fond de la cavité. La saumure est, quant à elle, pompée par l'annulaire 15 compris entre le tube plongeur 6 et le cuvelage 7 du forage 3. Par ailleurs, la bonne tenue mécanique du sel gemme autorise l'excavation d'importants volumes. Il en résulte des cavités de formes assez variées. Leur hauteur finale peut toutefois atteindre plusieurs centaines de mètres, tandis que leur diamètre est de l'ordre d'une soixantaine de mètres.

A l'issue de son exploitation, la cavité cesse d'être alimentée en eau douce (fermeture de la vanne 10). Elle se trouve alors remplie de saumure 8. Comme il a été dit ci-dessus, la communication entre la saumure en train de se dilater par suite de son échauffement et la surface doit être maintenue pour éviter une montée en pression du contenu liquide de la cavité. Un soutirage (symbolisé par la flèche continue 11) est réalisé à chaque fois que la pression enregistrée au sabot 9 du cuvelage 7 dépasse, par exemple, le poids des terres à la même profondeur.

Un premier mode de réalisation du procédé de la présente invention (cf figures 1 à 3) consiste alors à introduire dans la cavité, selon le schéma de la figure 2, un mélange 12 sous forme liquide, mais susceptible de faire prise. Pour cela, le tube plongeur 6 qui a servi à l'injection d'eau douce pendant l'extraction du sel, est de préférence utilisé. L'injection du mélange (symbolisée par la flèche double 13) s'effectue depuis la surface au moyen d'une pompe, avantageusement à pistons du type Putzmeister. Lors de l'introduction d'une quantité de mélange 12 dans la cavité, une quantité sensiblement équivalente de saumure 8 est refoulée en surface (symbolisée par la flèche continue 11) par l'annulaire 15.

Etant donné les volumes considérables mis en jeu, il importe tout d'abord de disposer d'un mélange 12 le moins cher possible. L'idée de le constituer essentiellement de déchets s'impose donc. Cela s'envisage d'autant plus volontiers que le sel gemme est une roche particulièrement étanche et que, par conséquent, des déchets même polluants peuvent y être placés sans nuire à l'environnement. D'un point de vue économique, il est dès lors intéressant de fabriquer ce mélange à partir de déchets qui n'ont pas d'exutoire satisfaisant en raison de leur pouvoir contaminant ou dont le coût d'élimination est élevé. Parmi les produits envisageables, il est possible de citer à titre d'exemple ceux rentrant dans les catégories ci-dessous. Les références correspondent à la classification préconisée par le Ministère de l'Environnement Français (cf. avis du 16 mai 1985) :

C 103 :  Liquides, bains et boues cadmiés cyanurés
C 104 :  Liquides, bains et boues cadmiés non cyanurés
C 105 :  Liquides, bains et boues chromiques acides
C 106 :  Liquides, bains et boues chromiques non acides
C 107 :  Liquides, bains et boues cyanurés
C 108 :  Autres liquides, bains et boues contenant des métaux non précipités.
C 121 :  Solvants halogénés
C 123 :  Déchets aqueux souillés de solvants halogénés
C 125 :  Culots non aqueux halogénés de régénération de solvants
C 126 :  Culots non aqueux non halogénés de régénération de solvants
C 145 :  Huiles isolantes chlorées (sauf C 151)
C 151 :  Huiles contenant des PCB ou PCT
C 161 :  Boues de peinture, vernis, colle avec phase aqueuse
C 162 :  Boues de peinture, vernis, colle avec phase organique
C 163 :  Déchets de peinture, vernis, colle sans phase liquide
C 164 :  Déchets d'encres ou de colorants avec phase organique
C 173 :  Graisses, corps gras, lubrifiants ou filmants d'origine minérale (sauf huiles moteurs ou huiles minérales entières mélangées).
C 174 :  Savons, corps gras, lubrifiants ou filmants d'origine végétale ou animale
C 183 :  Sels de trempe et autres déchets solides de traitements thermiques cyanurés
C 184 :  Sels de trempe et autres déchets solides de traitements thermiques non cyanurés
C 185 :  Déchets contenant des fibres d'amiante libres ou libérables
C 202 :  Poussières fines et cendres volantes
C 204 :  Sables de fonderie usagés
C 221 :  Eaux mères de fabrication salines
C 222 :  Eaux mères de fabrication non salines
C 224 :  Brais, goudrons, bitumes (sauf C 287)
C 225 :  Loupés et sous-produits de fabrication issus de synthèse organique (sauf C 221, C222, C 224 et
         résidus liquides de distillation de fabrication)
C 226 :  Eaux de lavage de matériel d'industrie chimique ou parachimique
C 244 :  Sulfate de calcium résiduaire souillé (phosphogypses..)
C 261 :  Oxydes metalliques résiduaires solides
C 262 :  Sels métalliques résiduaires solides hors alcalins
C 265 :  Catalyseurs usés
C 266 :  Soufre résiduaire
C 281 :  Boues d'hydroxides métalliques ayant subi un traitement de déshydratation
C 282 :  Boues d'hydroxides métalliques n'ayant pas subi de traitement de déshydratation
C 284 :  Résidus de décantation, filtration, centrifugation (sauf mélanges liquides eau/hydrocarbures, boues
         de neutralisation d'effluents acides, absorbants, adsorbants et C 281, C 282)
C 285 :  Résines échangeuses d'ions saturées ou usagées
C 287 :  Goudrons sulfuriques
C 288 :  Boues de lavage de gaz
C 301 :  Boues de forage
C 306 :  Matériels et matériaux souillés de PCB ou PCT
C 321 :  Loupés et chutes de fabrication non prises en compte dans les catégories précédentes
C 322 :  Piles, batteries et accumulateurs usagés
C 324 :  Rebuts d'utilisation de pesticides
C 325 :  Rebuts d'utilisation non pris en compte dans les catégories précédentes
C 326 :  Déchets chimiques de laboratoires non classables ailleurs du fait de leur conditionnement

Ce choix impose toutefois des contraintes technologiques. En effet, ces déchets ne doivent pas inhiber la prise du mélange 12. Ils sont donc analysés avant leur utilisation. Ils peuvent en outre se présenter sous des formes variées : liquides, particules de tailles diverses, solides. Selon le cas, ils doivent être conditionnés avant d'être amalgamés au mélange 12. Les liquides sont éventuellement solidifiés par exemple par piégeage dans une matière solide ; les solides concassés jusqu'à l'obtention de grains suffisamment fins pour pouvoir être transportés hydrauliquement dans les flexibles de la pompe d'injection ainsi que tout au long du tube plongeur 6 (diamètre de 7 à environ 10 pouces). Puis, ils sont ajoutés à un coulis de base dans des proportions qui peuvent être 30 % de déchets et 70 % de coulis, mais qui peuvent être élargies à 40-20 % contre 60-80 % par exemple.

Le coulis a pour fonction de permettre la prise du mélange. Cette dernière toutefois ne s'effectue que lentement et le mélange s'étale convenablement sur toute la section de la cavité en dépit de son caractère relativement pâteux. L'économie du procédé incite à avoir recours à un liant hydraulique et à retenir de préférence des résidus pour composer également le coulis de base. Il est envisagé d'utiliser, pour l'essentiel des produits favorisant la prise, comme par exemple des cendres volantes issues d'usines d'incinération d'ordures ménagères et de déchets industriels, ainsi que celles provenant du traitement de fumées (de centrales thermiques ou de hauts-fourneaux, par exemple), même si leur propriété pouzzolanique n'est alors pas optimale. Il est avantageux de prévoir une quantité de cendres volantes située entre 50 et 70 % de la quantité de produits secs entrant dans la composition du coulis. Entre 10 et 30 % de chaux peuvent par exemple y être ajoutés. La chaux est également récupérée à partir du fonctionnement d'installations chimiques ou industrielles telles que, par exemple, les usines de fabrication d'acétylène, les centrales d'épuration des eaux, les résidus des cimenteries... De même, l'eau provient de préférence d'eaux-mères qui n'ont pas actuellement de débouchés. Malgré cette composition peu onéreuse, le coulis doit aussi présenter des caractéristiques favorables comme un essorage et une synérèse limités, une très faible viscosité (complet étalement au cône de Marsh), ainsi qu'une densité supérieure à 1,5. A titre d'exemple, un coulis composé de 69 % de poussières provenant de l'usine d'incinération de Montauban et de 31 % d'eau, est envisageable.

Par ailleurs, l'approvisionnement en déchets risque d'être quelque peu sporadique. L'injection dans la cavité lessivée se fait plutôt par quantités limitées (par exemple 1000 m$^3$ par semaine) et elle reste au repos pendant les périodes intermédiaires. Il convient donc d'éviter que la base et l'intérieur du tube plongeur 6 ne se retrouvent scellés dans la masse du mélange ayant fait sa prise. L'extrémité inférieure du tube est par conséquent maintenue au-dessus de la surface 16 du mélange (à 1 = 30 cm par exemple). Cela implique la mise en oeuvre de moyens permettant la détection de cette surface, que le mélange soit déjà solidifié ou encore sous forme liquide. Une sonde type Rossignol pourrait convenir. Quant au déplacement du tube, il peut être démonté élément par élément selon une méthode fort bien connue des sondeurs. Chaque élément 17 du tube mesure par exemple $h_0$ = 9 m de hauteur. Après chaque injection il est nécessaire de nettoyer l'intérieur du tube. pour ce faire, il faut utiliser un racleur poussé soit par de la saumure soit par un autre liquide. Le racleur et un volume équivalent de saumure ou de liquide sont récupérés en fin d'opération de nettoyage.

Après le remplissage par quantités successives de mélange, comme cela vient d'être expliqué, le tube plongeur 6 peut définitivement être écarté du forage 3 (cf figure 3). Il convient alors d'attendre quelques années. En effet, la prise du mélange s'accompagne d'un certain retrait. Or, le sel gemme a la propriété de s'écouler à la manière d'un fluide. Ce phénomène est lent car la viscosité de ce fluide est extrêmement grande. Le fluage qui en résulte est toutefois capable d'entraîner la fermeture de la cavité sur l'inclusion solide, éliminant ainsi les vides laissés par le retrait du mélange pris. Les calculs montrent qu'il suffit alors d'attendre de 2 à 3 ans pour que tout vide ait disparu. Pendant cette période, qui reste très courte par rapport aux durées de surveillance envisagées jusque-là, le forage est maintenu ouvert afin de permettre l'évacuation de la saumure qui occupe les vides de retrait en train de se combler.

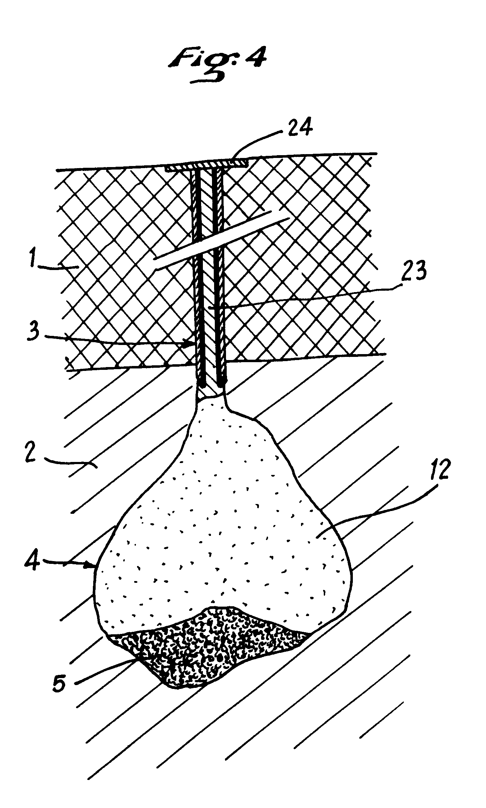

Puis, comme le montre la figure 4, un bouchon 23 est à son tour coulé dans le forage 3. Il est avantageusement constitué d'un coulis ayant la même composition que celui utilisé pour le mélange 12. Une dalle de finition 24 élimine finalement toute trace d'une cavité souterraine. Elle est alors définitivement abandonnée, l'inclusion solide formée par le mélange 12 pris assurant un soutènement stable de ses parois.

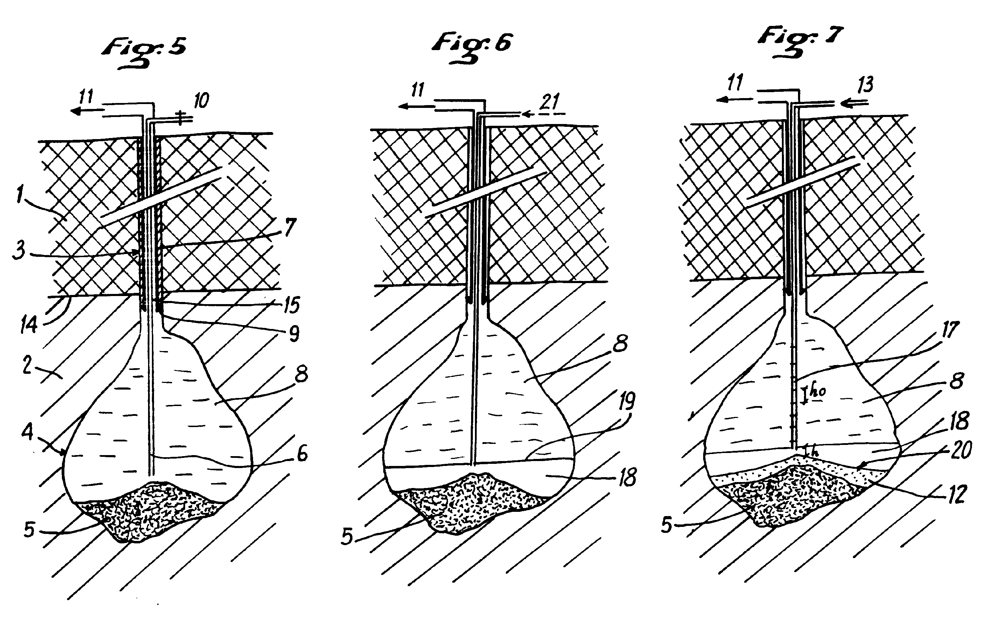

Dans un second mode de réalisation du procédé de l'invention (cf figures 5 à 10), une quantité prédéterminée d'un liquide dit tampon 19 est tout d'abord injectée dans la cavité. Celui-ci est non miscible avec la saumure et plus dense qu'elle (densité supérieure donc à 1, 2 et plutôt proche de 1, 3). Il reste par conséquent au fond de la cavité comme cela est montré sur la figure 6. Le liquide tampon est de préférence un solvant organique à base de dérivés halogénés de densité supérieure à celle de la saumure. Dans ce cas, il évite que le mélange 12, introduit ultérieurement (cf figure 7), ne se retrouve au contact de la saumure. Cela est avantageux lorsque les déchets entrant dans la composition du mélange sont susceptibles de contaminer la saumure et d'interdire ainsi sa commercialisation.

Il est toutefois nécessaire de veiller alors aux conditions d'injection du mélange. D'un côté, l'extrémité inférieure du tube plongeur 6 doit toujours rester dans le liquide tampon. Comme ce tube se démonte par élément de hauteur $h_0$ typiquement de 9m, la hauteur h de liquide tampon doit être supérieure à $h_0$ (donc proche en général de 10 m) et cela quelle que soit la section de la cavité. Il faut donc prévoir des moyens pour détecter l'interface 19 entre le liquide tampon et la saumure. La mesure des contrastes de densité à l'aide d'une sonde à neutrons ou $\gamma$-$\gamma$ peut être de ce point de vue intéressante. D'un autre côté, toute rupture dans le tube plongeur susceptible d'entraîner la contamination de la saumure doit au moins être repérée. Il est possible d'imaginer pour cela de fixer à chaque élément 17 du tube plongeur 6 une résistance électrique. Si toutes les résistances correspondantes sont placées en parallèle, le sectionnement du fil électrique les reliant au niveau, par exemple, de la jonction de deux éléments 17, se traduira alors par une variation notable d'intensité du courant qui signalera le dommage.

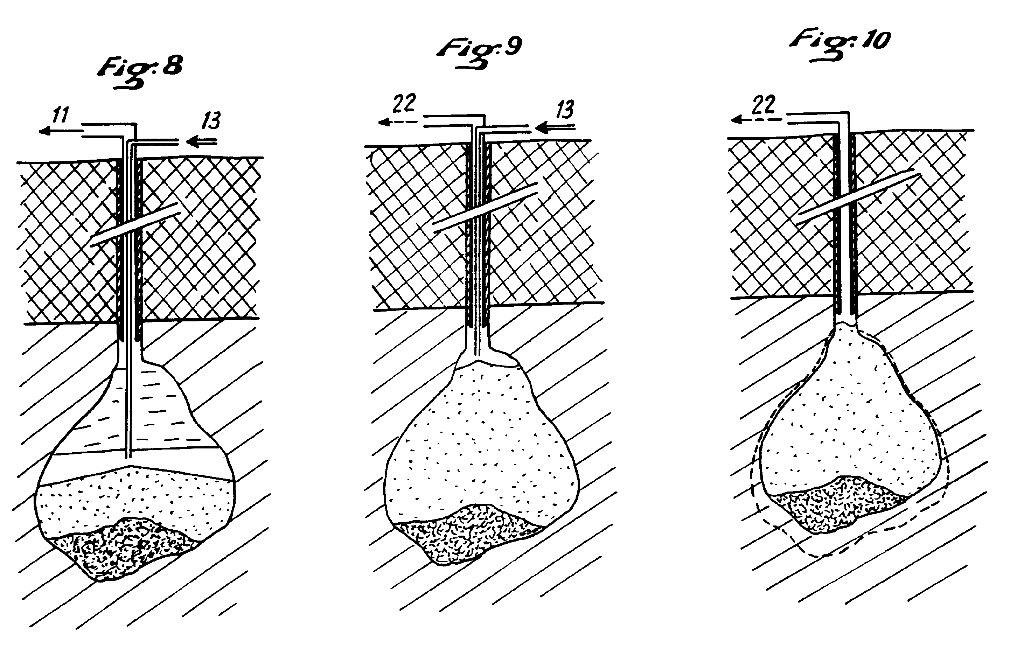

L'essentiel du remplissage de la cavité par le mélange 12 se poursuit dans ce second mode de réalisation comme dans le premier. L'introduction de matière (symbolisée par les flèches doubles 13 sur les figures 7 et 8) s'accompagne d'un soutirage équivalent de saumure (symbolisé par les flèches continues 11 des mêmes figures) qui peut dès lors être utilisée dans l'industrie chimique. Ce n'est qu'en fin de remplissage que le liquide tampon est à son tour récupéré (symbolisé par la flèche pointillée 22 de la figure 9). Puis, comme dans le premier mode de réalisation, il convient d'attendre le fluage de la cavité sur l'inclusion solide de mélange pris afin de la sceller définitivement et de l'abandonner.

**Revendications**

1. Procédé d'abandon rapide d'une cavité (4) lessivée dans le sel gemme (2) et initialement remplie de saumure (8), ledit procédé comportant les étapes :

   - d'injection dans ladite cavité (4) de quantités d'un mélange (12) plus dense que ladite saumure (8) et capable de faire prise tandis que des quantités équivalentes de ladite saumure (8) sont refoulées à l'extérieur de ladite cavité (4), et ce jusqu'au remplissage complet de ladite cavité (4) par ledit mélange (12),

   - de maintien d'une communication entre ladite cavité (4) remplie et l'extérieur pendant un délai d'attente,

   - puis de scellement de ladite cavité (4),

   caractérisé en ce que ledit délai d'attente est déterminé par le temps nécessaire audit sel gemme (2) pour refermer par fluage les vides de retrait apparus dans ledit mélange (12) remplissant complètement ladite cavité (4) et ayant fait prise.

2. Procédé selon la revendication 1, ladite cavité (4) communiquant avec l'extérieur par au moins un forage (3), un tube (6) plongeur ayant une extrémité inférieure étant adapté à être placé dans ledit au moins un forage (3) de sorte qu'un annulaire (15) est défini entre la paroi dudit forage (3), et celle dudit tube (6) plongeur, caractérisé en ce que

   - pendant ladite étape d'injection, ledit mélange (12) est injecté par ledit tube (6) plongeur tandis que ladite saumure (8) est refoulée par ledit annulaire (15), ladite extrémité inférieure dudit tube (6) étant maintenue en permanence au-dessus de la surface (16, 20) dudit mélange (12) à une distance proche d'une hauteur (1) prédéterminée ; en ce que

   - pendant ladite étape de maintien d'une communication entre ladite cavité (4) remplie et l'extérieur, ledit tube (6) est retiré dudit forage (3) et ledit forage (3) est maintenu ouvert ; et en ce que

   - pendant ladite étape de scellement, un bouchon (23) est coulé dans ledit forage (3).

3. Procédé selon la revendication 2, caractérisé en ce que des moyens de détection sont prévus pour localiser ladite surface (16, 20) dudit mélange et pour détecter la rupture dudit tube (6) plongeur pendant ladite phase d'injection.

4. Procédé selon la revendication 2 ou la revendication 3, caractérisé en ce qu'avant ladite étape d'injection, ledit procédé comporte une étape préliminaire d'introduction d'une quantité prédéterminée d'un liquide tampon (18) non miscible à ladite saumure (8) et de densité comprise entre celles de ladite saumure (8) et dudit mélange (12), ladite introduction étant effectuée par ledit tube (6) plongeur tandis qu'une quantité équivalente de ladite saumure (8) est refoulée en surface par ledit annulaire (15), ladite extrémité inférieure dudit tube (6) étant maintenue dans ledit liquide tampon (18) pendant ladite étape d'injection, ledit liquide tampon (18) étant à son tour refoulé à l'extérieur en fin de remplissage de ladite cavité (4).

5. Procédé selon la revendication 4, caractérisé en ce que des moyens de détection sont prévus pour localiser l'interface (19) saumure (8)-liquide tampon (18) pendant ladite phase d'injection.

6. Procédé selon la revendication 4 ou la revendication 5, caractérisé en ce que ledit tube (6) plongeur est constitué d'éléments (17) tubulaires démontables ayant chacun une longueur ho, ladite quantité prédéterminée dudit liquide tampon (18) étant calculée pour que la hauteur h de liquide tampon (18) dans ladite cavité soit pendant ladite étape d'injection supérieure à ladite longueur ho des éléments (17) tubulaires, ladite extrémité inférieure dudit tube (6) étant maintenue au sein dudit liquide tampon (18) grâce au démontage d'un élément (17) après l'autre.

7. Procédé selon l'une quelconque des revendications 4 à 6, caractérisé en ce que ledit liquide tampon (18) admet une densité comprise entre 1,2 et 1,7.

8. Procédé selon la revendication 7, caractérisé en ce que ledit liquide tampon (18) admet une densité proche de 1,3.

9. Procédé selon l'une quelconque des revendications 4 à 8, caractérisé en ce que ledit liquide tampon (18) contient un ou plusieurs solvants halogénés.

10. Procédé selon l'une quelconque des revendications précédentes, caractérisé en ce que ledit mélange (12) admet une densité supérieure à 1,5.

11. Procédé selon l'une quelconque des revendications précédentes, caractérisé en ce que ledit mélange (12) se compose d'une première proportion de déchets et d'une seconde proportion de coulis complémentaire de ladite première proportion, ladite première proportion étant inférieure à ladite seconde proportion.

12. Procédé selon la revendication 11, caractérisé en ce que ladite première proportion de déchets composant ledit mélange (12) est comprise entre 40 et 20 %.

13. Procédé selon la revendication 11 ou la revendication 12, caractérisé en ce que lesdits déchets sont des déchets polluants n'ayant pas d'exécutoire économique.

14. Procédé selon la revendication 13, caractérisé en ce que lesdits déchets peuvent être pris dans la liste suivante :

| | |
|---|---|
| C 103 : | Liquides, bains et boues cadmiés cyanurés |
| C 104 : | Liquides, bains et boues cadmiés non cyanurés |
| C 105 : | Liquides, bains et boues chromiques acides |
| C 106 : | Liquides, bains et boues chromiques non acides |
| C 107 : | Liquides, bains et boues cyanurés |
| C 108 : | Autres liquides, baines et boues contenant des métaux non précipités. |
| C 121 : | Solvants halogénés |
| C 123 : | Déchets aqueux souillés de solvants halogénés |
| C 125 : | Culots non aqueux halogénés de régénération de solvants |
| C 126 : | Culots non aqueux non halogénés de régénération de solvants |
| C 145 : | Huiles isolantes chlorées (sauf C151) |
| C 151 : | Huiles contenant des PCB ou PCT |
| C 161 : | Boues de peinture, vernis, colle avec phase aqueuse |
| C 162 : | Boues de peinture, vernis, colle avec phase organique |
| C 163 : | Déchets de peinture, vernis, colle sans phase liquide |
| C 164 : | Déchets d'encres ou de colorants avec phase organique |
| C 173 : | Graisses, corps gras, lubrifiants ou filmants d'origine minérale (sauf huiles moteurs ou huiles minérales entières mélangées). |
| C 174 : | Savons, corps gras, lubrifiants ou filmants d'origine végétale ou animale |
| C 183 : | Sels de trempe et autres déchets solides de traitements thermiques cyanurés |
| C 184 : | Sels de trempe et autres déchets solides de traitements thermiques non cyanurés |
| C 185 : | Déchets contenant des fibres d'amiante libres ou libérables |
| C 202 : | Poussières fines et cendres volantes |
| C 204 : | Sables de fonderie usagés |
| C 221 : | Eaux mères de fabrication salines |
| C 222 : | Eaux mères de fabrication non salines |
| C 224 : | Brais, goudrons, bitumes (sauf C 287) |
| C 225 : | Loupés et sous-produits de fabrication issus de synthèse organique (sauf C 221, C 222, C 224 et résidus liquides de distillation de fabrication) |
| C 226 : | Eaux de lavage de matériel d'industrie chimique ou parachimique |
| C 244 : | Sulfate de calcium résiduaire souillé (phosphogypses..) |
| C 261 : | Oxydes metalliques résiduaires solides |
| C 262 : | Sels métalliques résiduaires solides hors alcalins |
| C 265 : | Catalyseurs usés |
| C 266 : | Soufre résiduaire |

C 281 :    Boues d'hydroxides métalliques ayant subi un traitement de déshydratation

C 282 :    Boues d'hydroxides métalliques n'ayant pas subi de traitement de déshydratation

C 284 :    Résidus de décantation, filtration, centrifugation (sauf mélanges liquides eau/hydrocarbures, boues de neutralisation d'effluents acides, absorbants, adsorbants et C 281, C 282)

C 285 :    Résines échangeuses d'ions saturées ou usagées

C 287 :    Goudrons sulfuriques

C 288 :    Boues de lavage de gaz

C 301 :    Boues de forage

C 306 :    Matériels et matériaux souillés de PCB ou PCT

C 321 :    Loupés et chutes de fabrication non prises en compte dans les catégories précédentes

C 322 :    Piles, batteries et accumulateurs usagés

C 324 :    Rebuts d'utilisation de pesticides

C 325 :    Rebuts d'utilisation non pris en compte dans les catégories précédentes

C 326 :    Déchets chimiques de laboratoires non classables ailleurs du fait de leur conditionnement

d'après les catégories de déchets définies par le Ministère de l'Environnement Français dans son avis du 16 mai 1985.

**15.** Procédé selon l'une quelconque des revendications 11 à 14, caractérisé en ce que lesdits déchets subissent, avant leur incorporation dans ledit mélange, un conditionnement consistant :

- si lesdits déchets se présentent sous forme liquide, à les solidifier par piégeage dans une matrice solide,

- et/ou, lorsqu'ils sont solides ou ont été solidifiés, à fractionner lesdits solides en granulats pouvant être transportés hydrauliquement, notamment dans ledit tube (6) plongeur.

**16.** Procédé selon l'une quelconque des revendications 11 à 15, caractérisé en ce que ledit coulis contient entre 10 et 30 % de chaux ramenés au poids des matières sèches composant ledit coulis, ledit coulis contenant pour le reste des cendres volantes et de l'eau de gâchage.

**17.** Procédé selon la revendication 16, caractérisé en ce que ladite chaux est récupérée comme résidu de traitements chimiques ou industriels tels que la fabrication d'acétylène, l'épuration des eaux ou la fabrication de ciment.

**18.** Procédé selon la revendication 16 ou la revendication 17, caractérisé en ce que ledit coulis contient entre 50 et 70% de cendres volantes ramenés au poids des matières sèches composant ledit coulis.

**19.** Procédé selon l'une quelconque des revendications 16 à 18, caractérisé en ce que lesdites cendres volantes sont issues d'usines d'incinération d'ordures ménagères et de déchets industriels ainsi que d'installations de traitement de fumées dégagées par exemple par les centrales thermiques ou les hauts-fourneaux.

**20.** Procédé selon l'une quelconque des revendications 16 à 19, caractérisé en ce que ladite eau de gâchage provient de traitements chimiques ou industriels telle des eaux-mères.

## Patentansprüche

**1.** Verfahren zum schnellen Auflassen einer in Steinsalz (2) ausgewaschenen Kaverne (4), die ursprünglich mit Salzwasser (8) gefüllt war, wobei dieses Verfahren die folgenden Schritte aufweist:

- Einfüllen in diese Kaverne (4) von Mengen einer Mischung (12), die dichter ist als das Salzwasser (8) und sich verfestigen kann, während gleichwertige Mengen des Salzwassers (8) nach außerhalb der Kaverne (4) verdrängt werden, und dies bis zum vollständigen Füllen der Kaverne (4) mit dieser Mischung (12),

- Aufrechterhaltung einer Verbindung zwischen dieser gefüllten Kaverne (4) und der Außenwelt während eines Wartezeitraums,

- dann Versiegeln der Kaverne (4),

dadurch gekennzeichnet, daß dieser Wartezeitraum bestimmt wird durch die Zeit, die das Steinsalz (2) benötigt, um durch Fließen die in der Mischung (12), die die Kaverne (4) völlig ausfüllt und sich verfestigt hat, entstandenen Schwundleerräume zu schließen.

2. Verfahren nach Anspruch 1, bei dem die Kaverne (4) durch mindestens eine Bohrung (3) mit der Außenwelt verbunden ist, bei dem ein Tauchrohr (6) ein unteres Ende aufweist, das so in diese mindestens eine Bohrung (3) eingesetzt wird, daß ein ringförmiger Raum (15) zwischen der Wand dieser Bohrung (3) und der des Tauchrohrs (6) definiert wird, dadurch gekennzeichnet, daß
   - während des Einfüllschritts die Mischung (12) durch das Tauchrohr (6) eingefüllt wird, während das Salzwasser (8) durch den Ringraum (15) zurückgedrängt wird, wobei das untere Ende des Rohrs (6) permanent in einem Abstand nahe einer vorbestimmten Höhe (1) oberhalb der Oberfläche (16, 20) der Mischung (12) gehalten wird; daß
   - während des Schritts der Aufrechterhaltung einer Verbindung zwischen der gefüllten Kaverne (4) und der Außenwelt, dieses Rohr (6) aus der Bohrung (3) gezogen und die Bohrung (3) offengehalten wird, und daß
   - während des Schritts des Versiegelns ein Stopfen (23) in die Bohrung (3) gegossen wird.

3. Verfahren nach Anspruch 2, dadurch gekennzeichnet, daß Erfassungsmittel vorgesehen sind, um die Oberfläche (16, 20) der Mischung zu lokalisieren und um den Bruch des Tauchrohrs (6) während des Einfüllschritts festzustellen.

4. Verfahren nach Anspruch 2 oder Anspruch 3, dadurch gekennzeichnet, daß dieses Verfahren vor dem Einfüllschritt einen vorbereitenden Schritt des Einfüllens einer vorbestimmten Menge einer Pufferflüssigkeit (18) aufweist, die nicht mit dem Salzwasser (8) mischbar ist und deren Dichte zwischen der des Salzwassers (8) und der der Mischung (12) liegt, wobei das Einfüllen durch das Tauchrohr (6) geschieht, während eine gleichwertige Menge des Salzwassers (8) durch den Ringraum (15) zur Oberfläche zurückgedrängt wird, wobei das untere Ende des Rohrs (6) während dieses Einfüllschritts in dieser Pufferflüssigkeit (18) gehalten wird, während die Pufferflüssigkeit (18) ihrerseits am Ende des Füllvorgangs der Kaverne (4) nach außen zurückgedrängt wird.

5. Verfahren nach Anspruch 4, dadurch gekennzeichnet, daß Erfassungsmittel vorgesehen sind, um die Schnittstelle (19) Salzwasser (8) - Pufferflüssigkeit (18) während dieses Einfüllschritts zu lokalisieren.

6. Verfahren nach Anspruch 4 oder Anspruch 5, dadurch gekennzeichnet, daß das Tauchrohr (6) aus zerlegbaren rohrförmigen Elementen (17) besteht, die je eine Länge ho haben, wobei die vorbestimmte Menge der Pufferflüssigkeit (18) so berechnet ist, daß die Höhe h der Pufferflüssigkeit (18) in der Kaverne während des Einfüllschritts höher ist als die Länge ho der rohrförmigen Elemente (17), wobei das untere Ende des Rohrs (6) durch den Abbau eines der Elemente (17) nach dem anderen in der Pufferflüssigkeit (18) gehalten wird.

7. Verfahren nach einem beliebigen der Ansprüche 4 bis 6, dadurch gekennzeichnet, daß die Pufferflüssigkeit (18) eine Dichte zwischen 1,2 und 1,7 zuläßt.

8. Verfahren nach Anspruch 7, dadurch gekennzeichnet, daß die Pufferflüssigkeit (18) eine Dichte nahe 1,3 zuläßt.

9. Verfahren nach einem beliebigen der Ansprüche 4 bis 8, dadurch gekennzeichnet, daß die Pufferflüssigkeit (18) ein oder mehrere halogenhaltige Lösungsmittel aufweist.

10. Verfahren nach einem beliebigen der vorhergehenden Ansprüche, dadurch gekennzeichnet, daß die Mischung (12) eine Dichte von mehr als 1,5 zuläßt.

11. Verfahren nach einem beliebigen der vorhergehenden Ansprüche, dadurch gekennzeichnet, daß die Mischung (12) aus einem ersten Anteil von Abfällen und einem zweiten, zum ersten Anteil komplementären Anteil von Mörtel besteht, wobei der erste Anteil kleiner als der zweite Anteil ist.

12. Verfahren nach Anspruch 11, dadurch gekennzeichnet, daß der erste Anteil der die Mischung (12) bildenden Abfälle zwischen 40 und 20% beträgt.

13. Verfahren nach Anspruch 11 oder Anspruch 12, dadurch gekennzeichnet, daß die Abfälle umweltverschmutzende Abfälle sind, die unter keine wirtschaftliche Verordnung fallen.

14. Verfahren nach Anspruch 13, dadurch gekennzeichnet, daß die Abfalle aus der folgenden Liste genommen werden können:

| C 103: | kadmierte, cyanisierte Flüssigkeiten, Bäder und Schlämme |
| C 104: | kadmierte, nicht cyanisierte Flüssigkeiten, Bäder und Schlämme |
| C 105: | saure Chrom-Flüssigkeiten, -Bäder und -Schlämme |
| C 106: | nicht saure Chrom-Flüssigkeiten, -Bäder und -Schlämme |
| C 107: | cyanisierte Flüssigkeiten, Bäder und Schlämme |
| C 108: | andere Flüssigkeiten, Bäder und Schlämme, die nicht gefällte Metalle enthalten |
| C 121: | halogenhaltige Lösungsmittel |
| C 123: | mit halogenhaltigen Lösungsmitteln verschmutzte wässrige Abfälle |
| C 125: | nicht wässrige halogenhaltige Regenerierungs-Rückstände von Lösungsmitteln |
| C 126: | nicht wässrige, nicht halogenhaltige Regenerierungs-Rückstände von Lösungsmitteln |
| C 145: | gechlorte isolierende Öle (außer C151) |
| C 151: | Öle, die PCB oder PCT enthalten |
| C 161: | Schlämme von Farbe, Lack, Kleber mit wässriger Phase |
| C 162: | Schlämme von Farbe, Lack, Kleber mit organischer Phase |
| C 163: | Abfälle von Farbe, Lack, Kleber ohne flüssige Phase |
| C 164: | Abfälle von Tinte oder Farbstoffen mit organischer Phase |
| C 173: | Fette, Fettkörper, Schmiermittel oder Schichtbildner mineralischen Ursprungs (außer Motorölen oder völlig vermischten Mineralölen) |
| C 174: | Seifen, Fettkörper, Schmiermittel oder Schichtbildner pflanzlichen oder tierischen Ursprungs |
| C 183: | Härtsalze und andere feste cyanisierte Abfälle von Wärmebehandlungen |
| C 184: | Härtsalze und andere feste nicht cyanisierte Abfälle von Wärmebehandlungen |
| C 185: | Abfälle, die freie oder freisetzbare Asbestfasern enthalten |
| C 202: | feine Stäube und fliegende Aschen |
| C 204: | verbrauchter Gießereisand |
| C 221: | salzhaltige Industrie-Mutterlaugen |
| C 222: | nicht-salzhaltige Industrie-Mutterlaugen |
| C 224: | Pech, Teer, Asphalt (außer C 287) |
| C 225: | aus organischer Synthese entstandene Fertigungs-Ausschußprodukte und -Unterprodukte, (außer C 221, C 222, C 224 und flüssige Rückstände der Industrie-Destillation) |
| C 226: | Waschwasser von Material der chemischen oder parachemischen Industrie |
| C 244: | verschmutztes Rest-Calciumsulfat (Phosphogypse...) |
| C 261: | feste Rest-Metalloxide |
| C 262: | feste Rest-Metallsalze außer den alkalischen |
| C 265: | verbrauchte Katalysatoren |
| C 266: | Rest-Schwefel |
| C 281: | Schlämme von metallischen Hydroxiden, die einer Entwässerungsbehandlung unterzogen wurden |
| C 282: | Schlämme von metallischen Hydroxiden, die keiner Entwässerungsbehandlung unterzogen wurden |
| C 284: | Reste von Klärung, Filterung, Zentrifugierung (außer flüssigen Mischungen Wasser/Kohlenwasserstoff, Neutralisierungsschlämmen für saure, absorbierende, adsorbierende Abwässer und C 281, C 282) |
| C 285: | gesättigte oder verbrauchte Ionenaustauscherharze |
| C 287: | Schwefelteere |
| C 288: | Gasreinigungsschlämme |
| C 301: | Borschlämme |
| C 306: | mit PCB oder PCT verschmutzte Geräte und Stoffe |
| C 321: | Industrie-Ausschußprodukte und -abfälle, die in den vorhergehenden Kategorien nicht berücksichtigt wurden |
| C 322: | verbrauchte Zellen, Batterien und Akkumulatoren |
| C 324: | Abfälle vom Verbrauch von Pestiziden |
| C 325: | Verbrauchsabfälle, die in den vorhergehenden Kategorien nicht berücksichtigt wurden |
| C 326: | chemische Laborabfälle, die aufgrund ihrer Aufbereitung nicht anderswo eingeordnet werden können |

gemäß den vom französischen Umweltministerium in seiner Verlautbarung vom 16. Mai 1985 festgelegten Abfallkategorien.

15. Verfahren nach einem beliebigen der Ansprüche 11 bis 14, dadurch gekennzeichnet, daß die Abfälle vor ihrem Hineinmischen in die Mischung einer Behandlung unterzogen werden, die darin besteht:
- wenn die Abfälle in flüssiger Form vorliegen, sie zu verfestigen durch Einschließen in einer festen Matrix,
- und/oder, wenn sie fest sind oder verfestigt wurden, diese Festkörper in Granulate zu zerstoßen, die hydraulisch transportiert werden können, insbesondere im Tauchrohr (6).

16. Verfahren nach einem beliebigen der Ansprüche 11 bis 15, dadurch gekennzeichnet, daß der Mörtel zwischen 10 und 30% Kalk aufweist, rückgeführt auf das Gewicht der den Mörtel bildenden Trockensubstanzen, wobei der Rest des Mörtels aüs fliegender Asche und Mörtelwasser besteht.

17. Verfahren nach Anspruch 16, dadurch gekennzeichnet, daß der Kalk als Rückstand chemischer oder industrieller Verarbeitungen wie z.B. der Herstellung von Acethylen, der Wasserklärung oder der Herstellung von Zement wiedergewonnen wird.

18. Verfahren nach Anspruch 16 oder Anspruch 17, dadurch gekennzeichnet, daß der Mörtel zwischen 50 und 709% fliegende Asche aufweist, rückgeführt auf das Gewicht der den Mörtel bildenden Trockensubstanzen.

19. Verfahren nach einem beliebigen der Ansprüche 16 bis 18, dadurch gekennzeichnet, daß die fliegenden Aschen aus Fabriken zur Verbrennung von Haushaltsmüll und Industrieabfällen und aus Einrichtungen zur Rauchverarbeitung stammen, der z.B. von Wärmekraftwerken oder Hochöfen abgegeben wird.

20. Verfahren nach einem beliebigen der Ansprüche 16 bis 19, dadurch gekennzeichnet, daß das Mörtelwasser von chemischen oder industriellen Verarbeitungen wie z.B. von Mutterlaugen stammt.

## Claims

1. A method of rapidly abandoning a cavity (4) washed out in rock salt (2) and initially filled with brine (8), said method comprising the following steps:
- injecting quantities of a mixture (12) into said cavity (4), the density of said mixture being greater than that of the brine (8), and the mixture being capable of setting, with equivalent quantities of said brine (8) being simultaneously expelled from the cavity continuing such injection and brine expulsion until said cavity (4) is completely filled with said mixture (12),
- maintaining communication between the outside and said filled cavity (4) during a waiting period,
- thereafter sealing said cavity (4),
characterized in that the said waiting period is determined by the time required for the said rock salt (2) to close by flowage shrinkage voids that develop in said mixture (12), filling completely the cavity (4), and having set.

2. A method according to claim 1, said cavity (4) communicating with the outside via at least one borehole (3), a dip tube (6) having its bottom end suitable for being placed in said at least one borehole (3) so as to constitute an annular space (15) between the wall of said borehole (3) and the wall of said dip tube (6), characterized in that
during said injection step, said mixture (12) is injected via said dip tube (6) while said brine (8) is removed via said annular space (15), said bottom end of said tube (6) being permanently maintained above the surface (16, 20) of said mixture (12) at a predetermined height; in that
during said step of maintaining communication between the outside and said filled cavity (4), said tube (6) is withdrawn from said borehole (3) and said borehole (3) is kept open; and in that
during said scaling step, a plug (23) is cast into said borehole (3).

3. A method according to claim 2, characterized in that detector means are provided for locating said surface (16, 20) of said mixture and for detecting any breakage in said dip tube (6) during injection step.

4. A method according to claim 2 or claim 3, characterized in that prior to said injection step, said method includes a preliminary step of injecting a predetermined quantity of a buffer (18) liquid which is immiscible with said brine (8) and whose density is greater than that of said brine (8) and less than that of said mixture (12), said injection being performed via said dip tube (6) while an equivalent quantity of said brine (8) is expelled to the surface via said annular space (15), said bottom end of said dip tube (6) being maintained in said buffer (18) liquid during said mixture injection step, said buffer (18) liquid being in turn expelled to the outside when said cavity (4) is completely filled.

5. A method according to claim 4, characterized in that detector means are provided for locating the interface (19) between the brine (8) and the buffer (18) liquid during said mixture-injection step.

6. A method according to claim 4 or claim 5, characterized in that said dip tube (6) is made up of disconnectable tubular pieces (17) each having height $h_0$, said predetermined quantity of said buffer (18) liquid being determined so that the depth h of the buffer (18) liquid in said cavity always remains throughtout said injection step greater than said height $h_0$ of the pieces (17), said bottom end of said tube (6) being maintained within said buffer (18) liquid by removing the pieces (17) one after the other.

7. A method according to any one of claims 4 to 6, characterized in that the relative density of said buffer (18) liquid lies in the range 1.2 to 1.7.

8. A method according to claim 7, characterized in that the relative density of said buffer (18) liquid is approximately 1.3.

9. A method according to any one of claims 4 to 8, characterized in that said buffer (18) liquid contains one or more halogen-containing solvents.

10. A method according to any preceding claim, characterized in that the relative density of said mixture (12) is not less that 1.5.

11. A method according to any preceding claim, characterized in that said mixture (12) is constituted by a first fraction of waste material and by a second fraction of slurry in addition to said first fraction, said first fraction being smaller than said second fraction.

12. A method according to claim 11, characterized in that said first fraction of the waste in said mixture (12) lies between 40 % and 20 %.

13. A method according to claim 11 or claim 12, characterized in that said waste is polluting waste having no economic outlet.

14. A method according to claim 13, characterized in that said waste is taken from the following list:

| | |
|---|---|
| C 103: | Liquids, baths and sludge containing cadmium and cyanide |
| C 104: | Liquids, baths and sludge containing cadmium but not cyanide |
| C 105: | Acid liquids, baths and sludge containing chromium |
| C 106: | Non-acid liquids, baths and sludge containing chromium |
| C 107: | Liquids, baths and sludge containing cyanide |
| C 108: | Other liquids, baths and sludge containing non-precipitated metals |
| C 121: | Solvents containing halogens |
| C 123: | Aqueous wastes soiled with solvents containing halogens |
| C 125: | Non-aqueous halogen-containing residues from solvent regeneration |
| C 126: | Non-aqueous residues from solvent regeneration containing non halogens |
| C 145: | Insulating oils containing chlorine |
| C 151: | Oils containing PCBs or PCTs, |
| C 161: | Paint, varnish, or glue sludge containing an aqueous phase |
| C 162: | Paint, varnish, or glue containing an organic phase |
| C 163: | Paint, varnish, or glue wastes containing no liquid phase |
| C 164: | Ink or dye wastes containing an organic phase |
| C 173: | Greases, fats, lubricants, or film-forming substances of inorganic origin |
| C 174: | Soaps, lubricants, or film-forming substances of vegetable or animal origin |
| C 183: | Tempering salts and other solid wastes from heat treatments using cyanide |
| C 184: | Tempering salts and other solid wastes from heat treatments not using cyanide, |
| C 185: | Wastes containing asbestos fibers which are free or capable of being freed |
| C 202: | Fine dust and fly ash |
| C 204: | Used foundry sand |
| C 221: | Mother liquors for saline fabrication processes, |

| C 222: | Mother liquors for non-saline fabrication processes |
| C 224: | Pitch, tar, bitumen |
| C 225: | Manufacturing by-products and rejects derived from organic synthesis (except C 221, C 222, C 224 and liquid residue from distillation of manufacturing) |
| C 226: | Water used for washing equipment in chemical or parachemical industry |
| C 244: | Soiled residue calcium sulfate |
| C 261: | Solid metal oxide residues |
| C 262: | Alkali-free solid metal salt residues |
| C 265: | Exhausted catalysts |
| C 266: | Sulfur residue |
| C 281: | Metal hydroxide sludge that has been subjected to dehydration treatment |
| C 282: | Metal hydroxide sludge that has not been subjected to dehydration treatment |
| C 284: | Residues from sedimentation, filtration, and centrifuging (except liquid water/hydrocarbon mixture, sludges used for neutralizing acid effluents, absorbents, adsorbents, and C 281, C 282) |
| C 285: | Exhausted or saturated ion exchange resins |
| C 287: | Sulfur-containing tar, |
| C 288: | Gas washing sludge |
| C 301: | Drilling mud |
| C 306: | Materials and equipment soiled with PCBs or PCTs |
| C 321: | Manufacturing wastes and rejects not included in the preceding categories |
| C 322: | Worn-out primary and secondary batteries and cells |
| C 324: | Waste from use of pesticides |
| C 325: | Waste from use of substances not included in the preceding catogories, and |
| C 326: | Laboratory and chemical waste unsuitable for classification elsewhere by virtue of its packaging |

according to the waste categories determined by the French Department of the environment in his advice dated the 16th May 1985.

15. A method according to any one of claims 11 to 14, characterized in that said waste is subjected prior to being incorporated in said mixture, to preparation consisting in:

if said waste is in liquid form, in solidification by being trapped in a solid matrix, and/or

if said waste is solid or has been solidified, in splitting up said solid into grains capable of being transported hydraulically, in particular in said dip tube (6).

16. A method according to any one of claims 11 to 15, characterized in that said slurry contains between 10 % and 30 % of lime relative to the weight of the dry matter constituting said slurry, the remainder of said slurry being constituted by fly ash and waste water.

17. A method according to claim 16, characterized in that said lime is recovered as a residue of industrial or chemical treatment liwe from the manufacture of acetylene, the purification of water, or the manufacture of cement.

18. A method according to claim 16 or claim 17, characterized in that said slurry contains between 50 % and 70 % fly ash relative to the weight of dry matter incorporated in said slurry.

19. A method according to any one of claims 16 to 18, characterized in that said fly as comes from a plant for incinerating household wastes and industrial wastes and from installations for processing the smoke given off by fossil fuel power stations or by blast furnaces.

20. A method according to any one of claims 16 to 18, characterized in that said waste water comes from chemical or industrial treatment liwe, and is constituted by mother liquors.

Fig.3

Fig.2

Fig.1

Fig. 4

Fig. 5

Fig. 6

Fig. 7

EP 0 345 131 B1

Fig:8    Fig:9    Fig:10